# FASCICULE DE BREVET EUROPEEN

(11) **EP 0 609 141 B1**
(45) Date de publication et mention de la délivrance du brevet: **30.05.2001**
(21) Numéro de dépôt: 94400162.7
(22) Date de dépôt: 26.01.1994
(51) Int. Cl.: H05B 3/84, B60S 1/02

(54) **Procédé pour chauffer un vitrage pourvu d'une couche résistive**
Verfahren zum Beheizen einer mit einer Widerstandsschicht versehenen Glasscheibe
Method for heating a glass pane coated with a resistive layer

(30) Priorité: 26.01.1993 DE 4302005
(43) Date de publication de la demande: 03.08.1994
(73) Titulaire: SAINT-GOBAIN GLASS FRANCE, 92400 Courbevoie (FR); SEKURIT SAINT GOBAIN Deutschland GmbH & Co. KG, 52066 Aachen (DE)
(72) Inventeur: Kramling, Franz, Dr., D-5100 Aachen (DE); Goerenz, Walter, D-5110 Alsdorf (DE); Neumann, Dieter, D-5190 Stolberg/Vich (DE)
(74) Mandataire: Muller, René

(56) Documents cités:
- WO-A-87/04036
- FR-A- 931 577
- US-A- 3 302 002

## Description

La présente invention concerne un procédé pour chauffer un vitrage pourvu d'une couche résistive transparente par l'amenée de courant électrique à la couche résistive transparente via des électrodes montées sur le vitrage. Elle a trait, en outre, à un vitrage pourvu d'une couche conductrice transparente convenant pour l'exécution du procédé.

Dans le cas de vitrages électriques chauffables de forme rectangulaire ou sensiblement rectangulaire comportant une couche résistive transparente comme résistance chauffante, le courant de chauffage est, en règle générale, amené à la couche résistive par l'intermédiaire de deux électrodes en forme de ruban ou de bande disposées parallèlement l'une à l'autre, ces électrodes étant appliquées le long de deux bords opposés du vitrage. Dans un tel agencement, le courant de chauffage s'écoule en substance uniformément à travers la totalité de la couche résistive qui, de cette manière, est chauffée dans l'ensemble uniformément.

Dans le cas de vitrages chauffables électriquement dont la forme s'écarte de la forme rectangulaire, de sorte qu'une disposition parallèle des électrodes n'est pas possible, une zone de chauffage non homogène présentant des régions plus chaudes et plus froides se forme, car les trajets du courant dans la couche résistive sont de longueurs différentes en fonction de la disposition des électrodes. Si, dans le cas de tels vitrages dont la forme géométrique s'écarte de celle d'un rectangle, l'on souhaite obtenir une zone de chauffage homogène présentant une température sensiblement égale sur la totalité de la surface de la couche résistive, des mesures particulières doivent être prises.

Pour, dans le cas de surfaces non rectangulaires, obtenir un chauffage uniforme des vitrages, il est connu, par le document DE 36 36 160 A1, d'installer, en plus des électrodes délimitant la zone de flux de chauffage et à distance de celles-ci, des électrodes auxiliaires de potentiel déterminé en étendue et de les maintenir environ au potentiel correspondant. Ces électrodes auxiliaires et les conducteurs d'amenée qui y aboutissent sont cependant situés à l'intérieur de la zone de flux de chauffage, c'est-à-dire à l'intérieur de la zone de vision à travers le vitrage et altèrent la transparence de ce vitrage.

Le document WO-A-8 704 036 décrit un dispositif de chauffage d'une fenêtre de vision réalisée en un matériau polycristallin semi conducteur, la forme de ladite fenêtre étant non rectangulaire et plus précisément circulaire. Le dispositif décrit par ce document permet d'obtenir un chauffage homogène de la surface de la fenêtre. Ce dispositif consiste à disposer des électrodes à la périphérie de la fenêtre et alimenter ces électrodes par paire de façon alternée. Lorsque la volonté est d'obtenir un chauffage homogène de la surface de la fenêtre, les électrodes formant une paire sont diamétralement opposées.

Il est également connu, dans le cas de vitrages à zone de chauffage trapézoïdale, de subdiviser la couche résistive, par des lignes de séparation s'étendant parallèlement aux côtés parallèles du trapèze, en des segments séparés les uns des autres, d'équiper les segments individuels d'électrodes séparées et d'appliquer des tensions différentes aux électrodes des segments de couche individuels (document US-PS-2 878 357). Les lignes de séparation entre les segments de couche individuels sont cependant visibles et peuvent altérer l'aspect uniforme du vitrage.

Dans le cas de vitrages chauffables trapézoïdaux, il est également connu de subdiviser la zone de chauffage trapézoïdale, par des lignes de séparation s'étendant perpendiculairement aux côtés parallèles du trapèze, en plusieurs segments de surface, d'installer le long des deux côtés du trapèze, dans chaque segment de surface, plusieurs courtes électrodes les unes à côté des autres et de connecter chacune de ces électrodes à une électrode d'un segment de couche complémentaire (document EP-0 395 301 A2). Dans le cas d'autres zones de chauffage trapézoïdales, l'application de ce principe de connexion est difficilement réalisable.

L'invention a pour but de procurer un procédé pour le chauffage de vitrages pourvus d'une couche résistive transparente, qui, même dans le cas de formes de vitrages irrégulières et défavorables, permette un chauffage sensiblement uniforme au moins dans une région de surface sélectionnée, sans que la couche soit interrompue ou perturbée par des lignes de séparation ou par le montage d'électrodes supplémentaires à l'intérieur de la zone de chauffage.

Suivant l'invention, ce but est réalisé par le fait que le vitrage comporte une pluralité d'électrodes parmi lesquelles différentes paires d'électrodes sont alimentées en courant électrique en une succession chronologique et en ce que différentes puissances électriques sont appliquées aux dites paires d'électrodes conformément aux distances différentes entre les électrodes des différentes paires, pour correspondre à un segment de surface de la couche résistive qui est affecté.

Le procédé conforme à l'invention assure donc une alimentation différenciée temporellement et localement de la couche résistive au moyen du courant de chauffage en une succession récurrente. On obtient un chauffage uniforme par la commande de puissance individuelle relative aux segments de surface distincts sur la totalité de la surface de chauffage en alimentant des segments de surface entre deux électrodes davantage éloignées l'une de l'autre au moyen d'une puissance électrique plus élevée que des segments de surface situés entre deux électrodes qui sont séparées par une distance moindre.

On peut exécuter le procédé, par exemple en excitant les diverses paires d'électrodes, de préférence à des intervalles de temps constants au moyen de tensions électriques différentes. Au lieu de cela, on peut également exécuter le procédé en alimentant les diverses paires d'électrodes en courant de chauffage, pendant des intervalles de temps différents, en fonction de la résistance électrique du segment de couche chaque fois associé. Les diverses paires d'électrodes sont avantageusement alimentées en courant électrique les unes à la suite des autres, selon un rythme récurrent déterminé, par exemple de manière empirique, de telle façon que la surface chauffée présente, dans son ensemble, une température uniforme. Il est cependant également possible d'assurer l'excitation des diverses paires d'électrodes et la détermination de la puissance électrique chaque fois associée d'une manière telle que des régions déterminées de la couche résistive présentent une température spécifiquement supérieure, de telle sorte que dans ces régions, par exemple, l'opération de dégivrage soit accélérée.

Pour éviter des effets indésirables, c'est-à-dire en particulier, des surchauffes locales de la couche résistive, il est avantageux de toujours n'alimenter au même moment qu'une seule paire d'électrodes au moyen du courant de chauffage.

Un vitrage convenant pour l'exécution du procédé est caractérisé, en particulier, par le fait que les électrodes ont chacune une surface relativement petite et des lignes de délimitation circulaires ou courbes sans angle vif. De cette façon, on évite des concentrations locales des trajets de courant et ainsi des surchauffes locales en ces endroits. Les électrodes sont, de préférence, faites d'une encre à cuire contenant de l'argent, conductrice de l'électricité, ou d'un vernis conducteur durcissant à froid et peuvent être installées en des endroits quelconques de la couche résistive électrique. Elles sont avantageusement disposées à distance les unes des autres, le long du bord du vitrage.

Un exemple de réalisation de l'invention sera expliqué ci-après plus en détail avec référence aux dessins annexés, dans lesquels :
la Fig. 1 est une vue schématique d'un vitrage automobile chauffable électriquement, de forme irrégulière équipé du dispositif d'excitation conforme à l'invention, et
la Fig. 2 est un schéma synoptique d'un circuit électrique pour l'excitation du vitrage chauffant.

Le vitrage 1 représenté aux dessins a une forme géométrique irrégulière. Il est prévu, par exemple, comme glace latérale d'un véhicule automobile. Il est pourvu, sur la totalité de sa surface, d'un revêtement superficiel partiellement réfléchissant. Cette couche partiellement réfléchissante présente simultanément une résistance superficielle relativement faible de 3 à 4 ohms et doit être utilisée, en sus de sa fonction de couche réfléchissant les rayons infrarouges, comme résistance chauffante pour éliminer un film d'humidité ou éviter sa formation.

Le long de la section rectiligne inférieure 2 de la périphérie du vitrage, trois électrodes 5, 6 et 7 espacées latéralement d'une courte distance l'une de l'autre sont disposées les unes à côté des autres sur la surface du vitrage. Elles sont constituées d'une encre à cuire contenant de l'argent qui a été cuite à une température d'environ 600°C, en particulier au cours du procédé de bombage et/ou de trempe. Les électrodes 5 et 6 ont une surface ellipsoïdale et l'électrode 7 une surface circulaire. Chaque électrode est pourvue d'un élément de connexion électrique non représenté ici. A ces éléments de connexion électrique sont connectés, à l'état monté du vitrage, des câbles de branchement 8, 9 et 10 qui sont connectés via un sélecteur de commutation 11 au premier pôle de la source de tension.

Le long du bord supérieur 3 du vitrage est prévue une série d'électrodes 13, 14, 15, 16, 17, 18 et 19, ces électrodes étant mutuellement espacées d'une distance de quelques centimètres. Ces électrodes 13 à 19 sont de configuration circulaire. Chacune de ces électrodes 13 à 19 est pourvue d'un élément de connexion non représenté et est connectée par l'intermédiaire de cet élément de connexion à un câble de branchement électrique propre 23, 24, 25, 26, 27, 28 et 29. Les câbles de branchement mènent à un sélecteur de commutation 31 par l'intermédiaire duquel ils sont connectés à l'autre pôle de la source de tension.

Dans l'état de commutation représenté, la paire d'électrodes 5, 14 est connectée à la source de tension et une zone parcourue par le courant se forme entre ces deux électrodes dans la couche conductrice et a à peu près la forme des lignes de trajet de courant représentées aux dessins. Des zones parcourues par le courant en substance ellipsoïdales semblables se forment après la commutation du sélecteur de commutation 31 et/ou du sélecteur de commutation 11 entre les autres électrodes qui sont chaque fois activées. Etant donné que les distances entre les diverses paires d'électrodes sont différentes, les sélecteurs de commutation 11, 31 sont excités à des intervalles de temps tels que la durée de l'excitation des paires d'électrodes individuelles varie conformément à la résistance modifiée par les distances différentes.

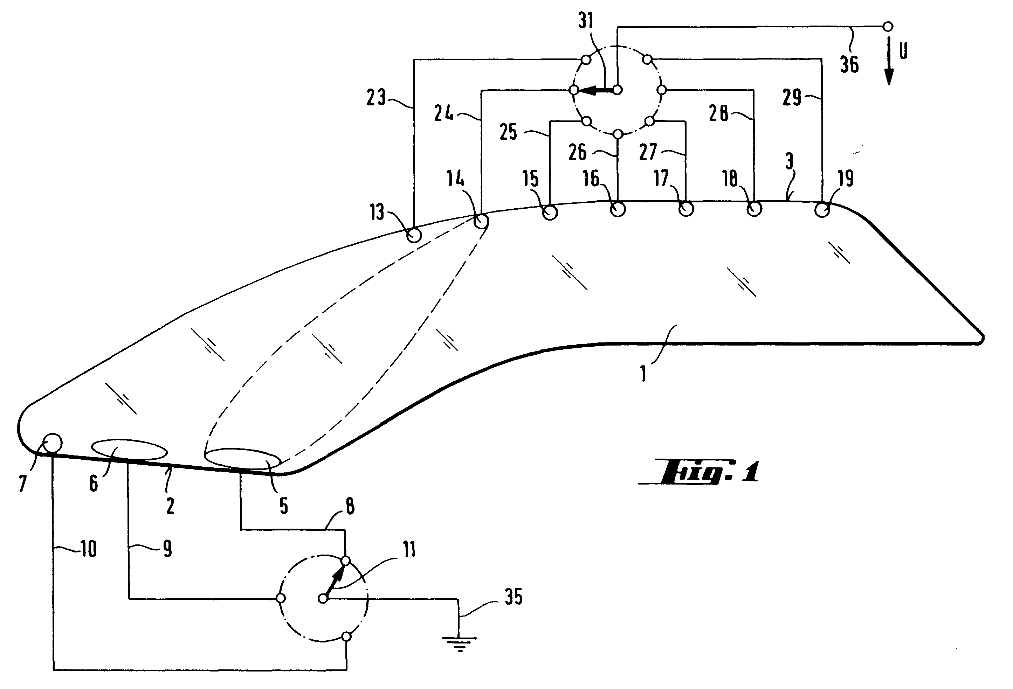

L'excitation différenciée dans le temps des diverses paires d'électrodes qui est illustrée schématiquement sur la Fig. 1 peut être réalisée de diverses manières, par exemple par l'intermédiaire d'un processeur ou à l'aide d'un dispositif de commande qui est formé de composants discrets.

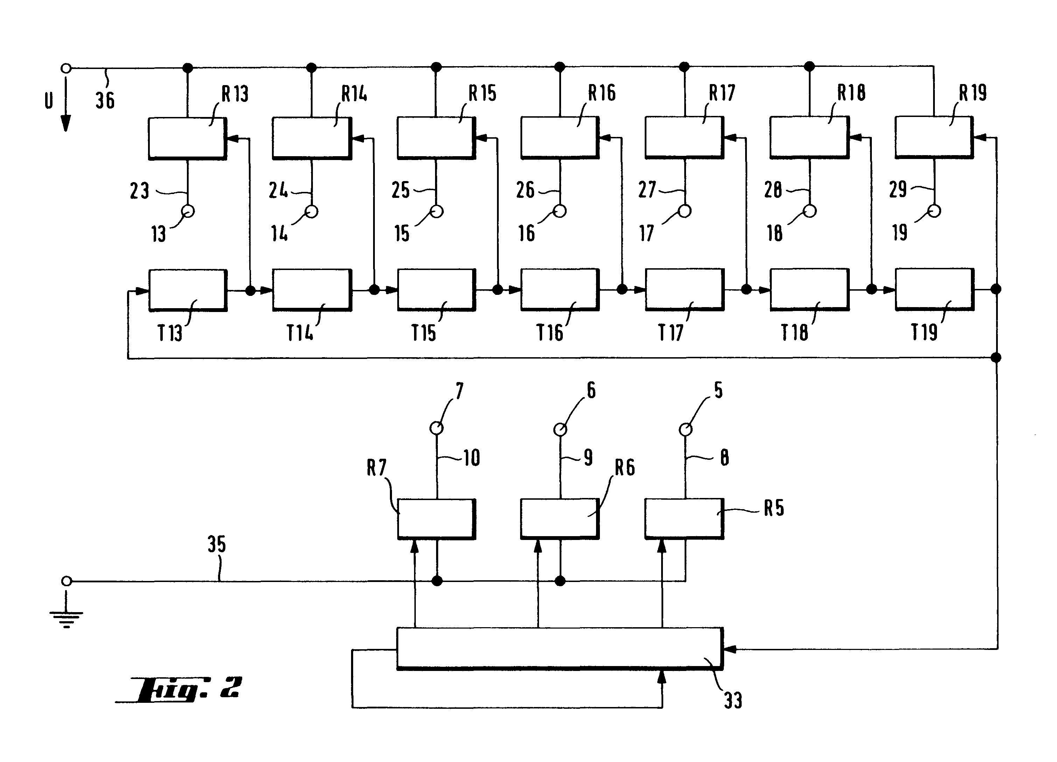

Un circuit de commande formé de composants discrets est illustré sous la forme d'un schéma synoptique sur la Fig. 2. Le circuit comprend des éléments temporisateurs variables T13, T14, T15, T16, T17, T18 et T19 qui sont associés aux électrodes 13 à 19 correspondantes. Ces éléments temporisateurs variables excitent d'une part les relais de commande R13 à R19 qui y sont chaque fois associés et d'autre part un registre à décalage 33 par lequel sont excités, par ailleurs, les relais de commande R5, R6, R7. Les relais R5, R6, R7 et R13 à R19 établissent, aux instants déterminés par les éléments temporisateurs, la connexion des lignes d'amenée de courant 8, 9, 10 et 23 à 29 avec les lignes 35 et 36 qui sont connectées à la source de tension.

Ce circuit de commande fonctionne de la manière suivante : l'élément temporisateur T13 est enclenché par un commutateur non représenté. De la sorte, les relais de commande R13 et R5 sont excités et ainsi les lignes d'amenée de courant 23 et 8 sont connectées aux lignes d'alimentation 36 et 35. Au terme de l'intervalle de temps présélectionné dans l'élément temporisateur T13, l'élément temporisateur T14 et le relais de commande R14 sont excités par l'élément temporisateur T13 et, simultanément, le relais de commande R13 est commuté, de sorte que l'arrivée de courant à la ligne 23 est interrompue et que la ligne 24 est à présent connectée à la ligne 36. Ces opérations sont effectuées en série sur les divers éléments temporisateurs jusqu'à l'élément temporisateur T19. Au terme de l'intervalle de l'élément temporisateur T19, le signal de sortie de cet élément temporisateur d'une part fait redémarrer l'élément temporisateur T13 et d'autre part fait progresser le registre à décalage 33 d'une position. Grâce à cette opération, le relais de commande R6 est excité et connecte pour sa part la ligne d'amenée de courant 9 connectée à l'électrode 6, à la ligne d'alimentation 35. Le cycle décrit se répète à présent avec l'électrode 6. Au terme de ce second cycle, le registre à décalage 33 progresse d'une position et lors, de ce troisième cycle, l'électrode 7 sert de contre-électrode active. Au terme de ce troisième cycle, le registre à décalage 33 revient dans sa position de départ et la séquence décrite recommence.

## Revendications

1. Procédé pour chauffer un vitrage (1) pourvu d'une couche résistive transparente par amenée d'un courant électrique à la couche résistive transparente via des électrodes (5-7, 13-19) montées sur le vitrage (1), **caractérisé en ce que** le vitrage (1) comporte une pluralité d'électrodes (5-7, 13-19) parmi lesquelles différentes paires d'électrodes sont alimentées en courant électrique en une succession chronologique et **en ce que** différentes puissances électriques sont appliquées auxdites paires d'électrodes conformément aux distances différentes entre les électrodes des différentes paires, pour correspondre à un segment de surface de la couche résistive qui est affectée.

2. Procédé suivant la revendication 1, **caractérisé en ce que** chacune des paires d'électrodes est excitée à des intervalles de temps constants au moyen de tensions électriques différentes dont le niveau dépend chaque fois de l'éloignement des deux électrodes et de la résistivité entre les deux électrodes.

3. Procédé suivant la revendication 1, **caractérisé en ce que** chacune des paires d'électrodes est alimentée au moyen du courant de chauffage pendant des intervalles de temps différents en fonction de la résistance électrique du segment de couche respectivement associé.

4. Procédé suivant la revendication 3, **caractérisé en ce que** les paires d'électrodes respectives sont excitées successivement au moyen d'une tension électrique constante.

5. Procédé suivant la revendication 3, **caractérisé en ce que** les paires d'électrodes respectives sont excitées successivement au moyen de tensions différentes.

6. Procédé suivant l'une quelconque des revendications 1 à 5, **caractérisé en ce que** l'alimentation des paires d'électrodes au moyen du courant électrique s'effectue selon un rythme constant récurrent.

## Patentansprüche

1. Verfahren zum Beheizen einer mit einer transparenten Widerstandsschicht versehenen Glasscheibe durch Einkoppeln von elektrischem Strom in die transparente Widerstandsschicht über auf der (1) Glasscheibe angeordnete Elektroden (5-7, 13-19), **dadurch gekennzeichnet**, dass die Glasscheibe (1) eine Mehrzahl von Elektroden (5-7, 13-19) aufweist, von denen in zeitlicher Aufeinanderfolge unterschiedliche Elektrodenpaare mit elektrischem Strom versorgt werden, und dadurch, dass den besagten Elektrodenpaaren entsprechend den unterschiedlichen Abständen zwischen den Elektroden der verschiedenen Paare unterschiedliche elektrische Leistungen zugeführt werden, welche dem jeweils betroffenen Oberflächensegment der Widerstandsschicht entsprechen.

2. Verfahren nach Anspruch 1, **dadurch gekennzeichnet,** daß die jeweiligen Elektrodenpaare in gleichbleibenden Zeitintervallen mit unterschiedlichen elektrischen Spannungen angesteuert werden, deren Höhe jeweils von der Entfernung der beiden Elektroden und dem Schichtwiderstand zwischen den beiden Elektroden abhängt.

3. Verfahren nach Anspruch 1, **dadurch gekennzeichnet,** daß die jeweiligen Elektrodenpaare mit dem Heizstrom während unterschiedlicher Zeitintervalle in Abhängigkeit vom elektrischen Widerstand des jeweils zugehörigen Schichtsegments versorgt werden.

4. Verfahren nach Anspruch 3, **dadurch gekennzeichnet,** daß die jeweiligen Elektrodenpaare nacheinander mit einer konstanten elektrischen Spannung angesteuert werden.

5. Verfahren nach Anspruch 3, **dadurch gekennzeichnet,** daß die jeweiligen Elektrodenpaare nacheinander mit unterschiedlichen Spannungen angesteuert werden.

6. Verfahren nach einem der Ansprüche 1 bis 5, **dadurch gekennzeichnet**, daß die Versorgung der Elektrodenpaare mit dem elektrischen Strom in einem sich wiederholenden gleichbleibenden Rhythmus erfolgt.

## Claims

1. Method for heating a glazing (1) provided with a transparent, resistive coating by supplying an electric current to the transparent, resistive coating via electrodes (5-7, 13-19) installed on the glazing (1), characterized in that the glazing (1) has a plurality of electrodes (5-7, 13-19), among which different pairs of electrodes are supplied with electric current in a chronological succession and in that different electric powers are applied to said electrode pairs in accordance with the different distances between the electrodes of the different pairs, so as to correspond to a surface segment of the affected resistive coating.

2. Method according to claim 1, characterized in that each of the electrode pairs is excited at constant time intervals by means of different voltages, whose level on each occasion depends on the spacing of two electrodes and the resistivity between the two electrodes.

3. Method according to claim 1, characterized in that each of the electrode pairs is supplied by means of a heating current during different time intervals as a function of the electrical resistance of the respectively associated coating segment.

4. Method according to claim 3, characterized in that the respective electrode pairs are successively excited by means of a constant voltage.

5. Method according to claim 3, characterized in that the respective electrode pairs are successively excited by means of different voltages.

6. Method according to any one of the claims 1 to 5, characterized in that the supply of electric current to the electrode pairs takes place in accordance with a recurrent, constant rhythm.
